# EUROPEAN PATENT APPLICATION

(11) **EP 3 888 818 A1**
(43) Date of publication of application: **06.10.2021**
(21) Application number: 21163624.6
(22) Date of filing: 19.03.2021
(51) Int. Cl.: B22D 33/00, B66F 7/06, B66C 5/04

(54) **LIFTING APPARATUS**

(30) Priority: 30.03.2020 IT 202000006580
(71) Applicant: Comcor Engineering - SRL, 41041 Casinalbo (MO) (IT)
(72) Inventor: ORLANDINI, Claudio, 41051 CASTELNUOVO RANGONE (MO) (IT)
(74) Representative: Corradini, Corrado

(57) **Abstract**

A lifting apparatus (100) is described, comprising: a plurality of support columns (105) arranged in plan at the vertexes of a polygon, a plurality of sliding blocks (150), each of which is slidingly coupled to a corresponding support column (105) so as to be adapted to slide with respect thereto in substantially vertical direction, a movable frame (125) adapted to carry a load to be lifted, which is placed between the support columns (105) and is connected to the sliding block (150) of each of them, and a motorized actuation system adapted to actuate the simultaneous and parallel sliding of all the sliding blocks (150) with respect to the corresponding support columns (105), wherein said motorized actuation system comprises a plurality of drivetrain assemblies (210) individually adapted to transform the mechanical power generated by a motor (215) into the sliding of a corresponding sliding block (150), each of which comprises: an operating screw (220) oriented substantially vertical and rotatably coupled to the support column (105) to which the corresponding sliding block (150) is slidingly coupled, and at least a first female screw (240) screwed on the operating screw (220) and axially blocked to the respective sliding block

## Description

### Technical field

The present invention relates in general to a lifting apparatus, and more specifically, a lifting apparatus for lifting heavy loads with increased accuracy and safety, while ensuring the irreversibility of the movement.

### Known technique

As is known, lifting apparatuses normally comprise a support structure, movable equipment adapted to support the load to be lifted and actuation means adapted to move the movable equipment in vertical direction with respect to the support structure.

These lifting apparatuses are highly widespread machines in many sectors of the art, where they may also take on very different forms of construction according to the type of load to be lifted and the requirements in terms of lifting power and accuracy.

One sector of the art in which the use of a lifting apparatus is required is for example, the one of moulding carbon-fibre based composite materials.

The use is indeed known in this specific sector, of moulds provided with a lower part and an upper part, between which the raw material to be moulded is interposed.

At the end of the moulding step, the upper part of the mould is to be lifted (extracted) from the lower part so as to allow the removal of the product obtained and the subsequent reuse of the mould.

However, to avoid damaging the product just obtained, the lifting of the upper part of the mould is to be performed in a highly accurate manner, i.e. causing it to carry out an almost perfect translation in vertical direction, avoiding the same from inclining or being subjected to lateral oscillations.

Considering that this need is accompanied by the fact that the upper part of the mould may at times be highly cumbersome and heavy, it is easy to understand how the lifting apparatus is a highly critical element for the successful outcome of the entire process.

Another need of this lifting apparatus is the one of having an increased reliability and safety, i.e. that it may perform many load lifting and lowering cycles without becoming less efficient and especially without running the risk of the occurrence of accidental falls of the load due to structural failures.

Naturally, these needs are not exclusive to the field of moulding carbon-fibre based composite materials, rather they may similarly be present in any other field providing the use of a lifting apparatus.

### Description of the invention

In light of that disclosed, an object of the present invention is to make available a lifting apparatus which is also capable of lifting very heavy and cumbersome loads in an accurate, reliable and safe manner.

Another object of the present invention is that of achieving such objective within the context of a relatively simple, rational and cost-effective solution.

These and other objects are reached by the characteristics of the invention set forth in independent claim 1. The dependent claims outline preferred and/or particularly advantageous aspects of the invention which however are not strictly required for the implementation thereof.

In particular, an embodiment of the present invention makes available a lifting apparatus comprising:
- a plurality of support columns arranged in plan at the vertexes of a polygon,
- a plurality of sliding blocks, each of which is slidingly coupled to a corresponding support column so as to be adapted to slide with respect thereto in substantially vertical direction,
- a movable frame adapted to carry a load to be lifted, which is placed between the support columns and is connected to the sliding block of each of them, and
- a motorized actuation system adapted to actuate the simultaneous and parallel sliding of all the sliding blocks with respect to the corresponding support columns,
wherein said motorized actuation system comprises a plurality of drivetrain assemblies individually adapted to transform the mechanical power generated by a motor into the sliding of a corresponding sliding block, each of which comprises:
- an operating screw oriented substantially vertical and rotatably coupled to the support column to which the corresponding sliding block is slidingly coupled,
- at least a first female screw screwed on the operating screw and axially blocked to the respective sliding block.

Due to the peculiar arrangement of the support columns, the movable frame carrying the load to be lifted is supported in a highly stable and safe manner.

The actuation by means of screw/female screw type drivetrain assemblies allows a very accurate, fluid and regular movement of the movable frame in vertical direction.

The fact that these drivetrain assemblies are individually present at each support column also has the advantage that the movable frame can be lifted and lowered, keeping it always actively supported in a plurality of different zones.

In this manner, it is avoided for the movable frame to incline under the action of the load associated therewith, which also results in less wear of the sliding blocks along the support columns and less risk of jamming which could cause sudden and accidental stops of the movable frame, with subsequent shakes and vibrations transmitted to the load.

According to an aspect of the present invention, each drivetrain assembly may also comprise a second female screw screwed on the operating screw, which is axially movable with respect to the respective sliding block and is provided with a resting surface placed below a corresponding abutment surface of the corresponding sliding block, from which it is vertically spaced apart by a predetermined quantity.

Thanks to this solution, so long as the first female screw operates correctly, the second female screw does not perform any active lifting function since the same is released in axial direction with respect to the corresponding sliding block.

The weight of the movable frame is unloaded only on the first female screw, which threads lean on the corresponding threads of the operating screw and, sliding thereon due to the effect of the rotation of the operating screw itself, cause the lifting or lowering of the movable frame.

Following this mutual sliding, the threads of the first female screw may be worn due to friction, causing a progressive lowering of the sliding block with respect to the second female screw and in particular, a progressive lowering of the abutment surface of the sliding block with respect to the resting surface of the second female screw.

If this wear reaches values which are higher than a given threshold, the abutment surface of the sliding block may come into direct contact with the resting surface of the second female screw, which therefore is axially constrained to the sliding block, receiving at least part of the weight of the movable frame and accordingly, assisting and/or replacing the first female screw in the lifting action.

The second female screw is therefore a safety element which ensures the lifting apparatus can continue to operate efficiently also when the first female screw is very worn, thus avoiding sudden structural failures which could compromise the integrity of the lifting apparatus and the loads associated therewith.

Moreover, by periodically checking the vertical distance between the resting surface of the second female screw and the abutment surface of the corresponding sliding block, the users of the lifting apparatus advantageously are able to realize the state of wear of the first female screw and promptly take the necessary counter-measures.

In particular, this check may be performed within the context of scheduled maintenance on the lifting plant, which may be scheduled based on the work performed by the female screw on the operating screw, which is for example, quantified in terms of metres of movement (raising plus lowering) performed overall.

A control station may therefore count this movement and when it reaches pre-set threshold values, inform the users, for example by means of a control panel, of the need to perform the maintenance and/or replace the female screw.

According to an aspect of the invention, the vertical distance between the resting surface of the second female screw and the abutment surface of the sliding block may be less than the pitch of the operating screw.

In this manner, it is possible to ensure the sliding block leans on the second female screw before the threading of the first female screw is completely worn, thus avoiding tears and sudden failures.

Another aspect of the present invention provides for the second female screw to be located at a higher height with respect to the first female screw.

In this manner, the second female screw may be installed more easily during the assembly of the lifting equipment.

According to another aspect of the invention, the lifting apparatus may comprise at least four of said support columns arranged in plan at the vertexes of a quadrilateral, preferably at the vertexes of a square.

Due to this number and this arrangement of the support columns, it advantageously is possible to make a very stable structure that is capable of supporting the movable frame also when the overall dimensions of the loads to be lifted require the columns to be placed at great distances from one another, for example also when the diagonals of the quadrilateral defined by the support columns are equal to or greater than 4 m (metres).

In this context, an aspect of the invention provides for the movable frame to comprise two horizontal arms arranged crossed, for example in a cross or X, each of which extends parallel to a respective diagonal of the quadrilateral defined by the support columns and has opposite ends individually connected to a corresponding sliding block.

This conformation allows giving the support frame increased structural rigidity and relatively contained weights.

According to another aspect of the invention, each sliding block may be connected to the movable frame by means of a hinged joint defining a swivel axis parallel to a diagonal of the quadrilateral and coplanar to the swivel axes of the movable frame with the other sliding blocks.

Thanks to this solution, while ensuring a stable connection between the movable frame and the sliding blocks, the number of hyperstatic constraints advantageously is reduced which, due to the unavoidable construction tolerances and the possible wear of the moving components, could cause anomalous stresses of the various components during the movement.

In particular, the aforesaid hinged joint may simply comprise a bush connected to one of the movable frame and the corresponding sliding block (e.g. to the sliding block) and a pin connected to the other of the movable frame and the corresponding sliding block (e.g. to the movable frame) that is axially inserted in said bush.

In this manner, making the hinged joint is constructively very simple.

According to a particular aspect of the invention, the pin of the hinged joint may be free to slide axially in the corresponding bush (at least for a limited stretch).

Thanks to this solution, the possibility is ensured for the movable frame to perform small lateral movements so as to compensate for the construction tolerances and accommodate - without creating anomalous stresses - the minimum inclination variations that the movable frame may undergo during prolonged use, for example due to the wear of the screw/female-screw drivetrain assemblies and/or to an imperfect positioning (perpendicularity) of the support columns.

According to a different aspect of the invention, the lifting apparatus may comprise a stiffening frame placed at the top of the support columns and adapted to connect them rigidly to one another.

Thanks to this solution, the structural stability of the support columns advantageously is increased, allowing more cumbersome and heavy loads to be lifted.

According to a further aspect of the invention, each sliding block may be slidingly coupled to the corresponding support column by means of one or more skids rigidly fastened to the sliding block, which create a prismatic coupling with a corresponding guide track rigidly fastened to the support column.

This aspect of the invention provides a simple and effective solution for allowing a fluid and regular sliding of each sliding block with respect to the corresponding support column.

Another aspect of the invention provides for the lifting apparatus to further comprise hooking members for hooking the movable frame to a load to be lifted.

In this manner, it advantageously is possible to constrain the load to be lifted so that it follows the vertical movement of the movable frame.

For example, the hooking members may comprise a plurality of chains hung to the movable frame.

Thanks to the flexibility thereof, these chains have the advantage of allowing small misalignments between the movable frame and the load to be lifted.

According to a further aspect of the invention, the motorized actuation system may comprise one motor alone kinematically connected to the operating screws of all the drivetrain assemblies.

In this manner, it advantageously is possible to lift and lower the movable frame with a single motor, for example with a single electric motor, thus reducing the costs of the lifting apparatus and ensuring the simultaneous actuation of all the sliding blocks.

### Brief description of the drawings

Further features and advantages of the invention will be more apparent after reading the following description provided by way of a non-limiting example, with the aid of the accompanying drawings.
Figure 1 is an axonometric view of a lifting apparatus according to an embodiment of the present invention.

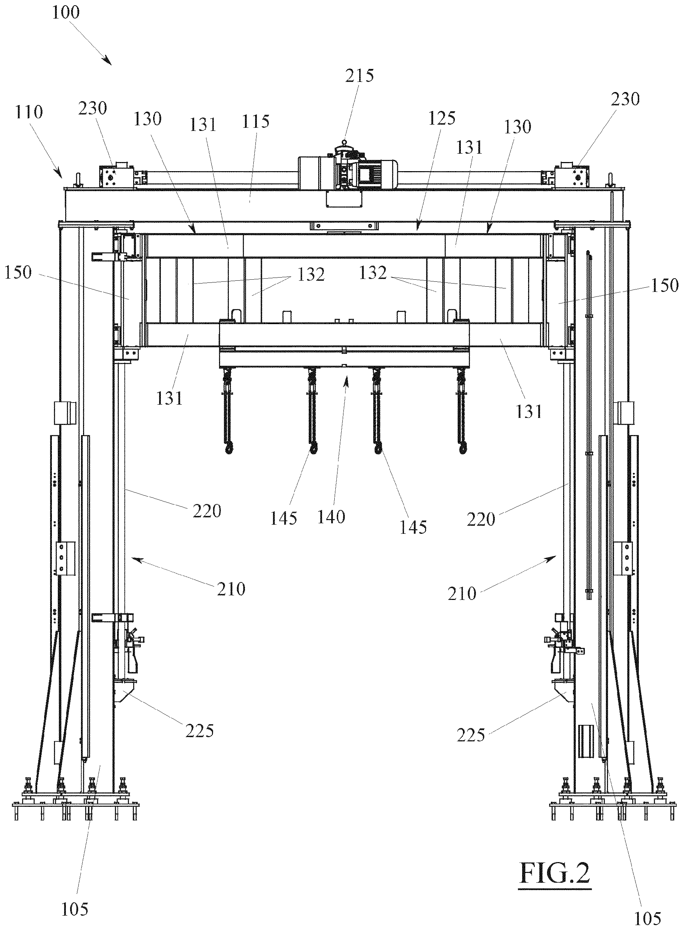

Figure 2 is a front view of the lifting apparatus in Figure 1.
Figure 3 is a plan view (i.e. from the top down) of the apparatus in Figure 1.
Figure 4 is a longitudinal section, taken according to a vertical plan, of a support column belonging to the lifting apparatus in Figure 1.
Figure 5 is the detail V indicated in Figure 4 shown in enlarged scale.
Figure 6 is the section VI-VI indicated in Figure 5.

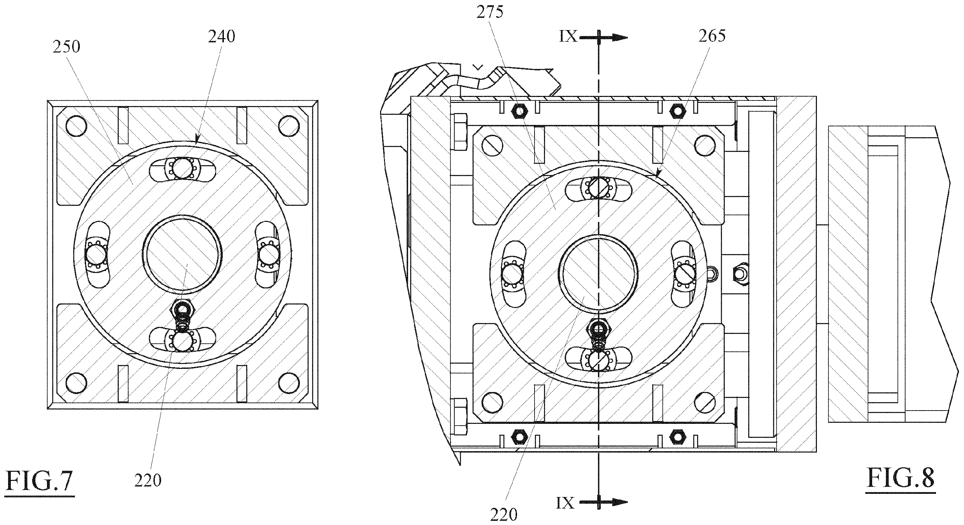

Figure 7 is the section VII-VII indicated in Figure 5.
Figure 8 is the section VIII-VIII indicated in Figure 5.
Figure 9 is the section IX-IX indicated in Figure 8.
Figure 10 is the detail X indicated in Figure 5.

### Detailed description

The mentioned drawings show a lifting apparatus 100, which may be used in the field of moulding carbon-fibre based composite materials, for example for lifting (extracting) the upper part of a specific mould from a lower part thereof.

However, it is not excluded for the lifting apparatus 100 to be used in any other field of the art where lifting one or more loads is required.

The lifting apparatus 100 comprises a plurality of support columns 105, each of which extends vertically from a lower end, which is adapted to be rigidly fastened to the ground, towards an opposite top end.

The support columns 105 may be identical to one another and preferably all have the same height.

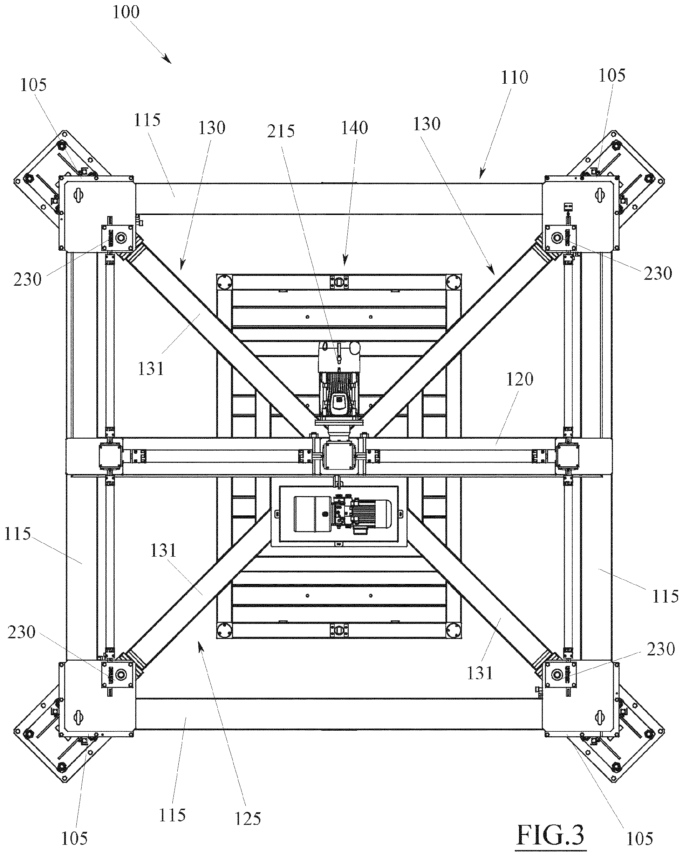

These support columns 105 are parallel, mutually spaced apart and arranged in plan, i.e. with respect to a top view, substantially at the vertexes of a polygon (see Fig. 3).

The lifting apparatus 100 herein illustrated in particular comprises four support columns 105 that are arranged in plan at the vertexes of a quadrilateral, in the case at hand at the vertexes of a square.

In this manner, a first pair of support columns 105 is aligned in plan along one diagonal of the quadrilateral, while the second pair of support columns 105 is aligned in plan along the other diagonal of the quadrilateral.

The distance between the two support columns 105 that are on each of said diagonals may be rather large, for example equal to or greater than 4 m (metres).

The lifting apparatus 100 further comprises a stiffening frame, indicated as a whole with 110, which is fastened to the top ends of all the support columns 105 so as to rigidly connect them to one another and thus increase the stability and robustness of the structure.

This stiffening frame 110 may extend mainly in a horizontal plane and may be shaped like a frame having the shape and sizes of the polygon defined by the support columns 105 and the vertexes of which are fastened at the top ends of the latter.

In the example illustrated, the stiffening frame 110 is shaped like a quadrilateral frame, in the case at hand a square frame, which may be formed by four longitudinal members 115, each of which connects a pair of adjacent support columns 105.

The stiffening frame 110 may further comprise an intermediate bar 120, which is rigidly fastened to a pair of opposite longitudinal members 115, preferably to the median portion thereof, extending parallel to the other pair of longitudinal members 115.

The lifting apparatus 100 further comprises a movable frame, indicated as a whole with 125, which is positioned between the support columns 105 and below the stiffening frame 110.

The movable frame 125 also may extend mainly in a horizontal plane.

Referring to the plan view in Figure 3 (i.e. from the top) in particular, the movable frame 125 may comprise two mutually crossed horizontal arms 130, each of which extends parallel to a respective diagonal of the quadrilateral defined by the support columns 105.

In the example illustrated, the horizontal arms 130 have the same length and are arranged in mutually orthogonal manner to form a cross, but it is not excluded in other embodiments for the horizontal arms 130 to have different lengths and/or be arranged in an X, i.e. not be perfectly orthogonal to each other.

Each horizontal arm 130 may be made by a pair of mutually overlapping longitudinal bars 131 spaced apart in vertical direction that preferably are connected by a series of transverse uprights 132.

The longitudinal bars 131 may be made in a single piece or in several separate sections, for example in two mutually aligned sections fastened at the zone representing the intersection between the two horizontal arms 130.

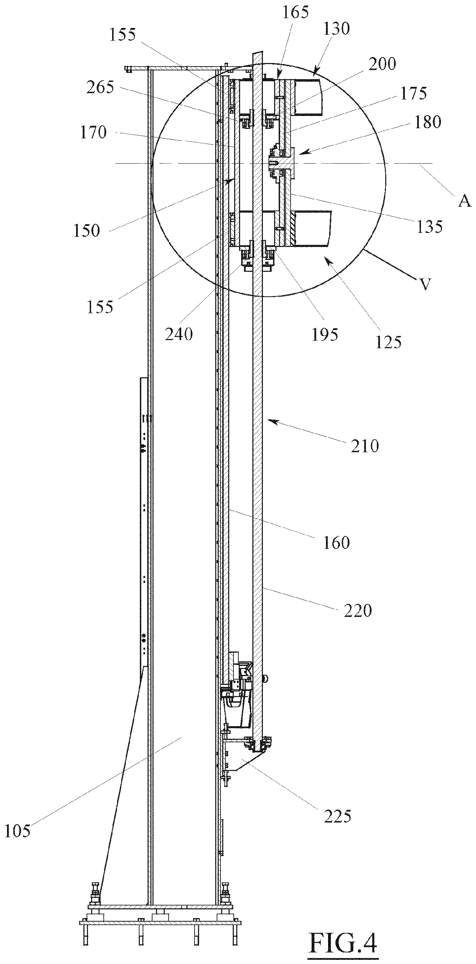

The movable frame 125 may comprise, at each free end of each horizontal arm 130, an end plate 135 that may be oriented orthogonal to the relative horizontal arm 130 and may be rigidly fastened at the ends of both longitudinal bars forming the horizontal arm 130 itself (see also Fig. 4).

The movable frame 125 may further comprise a horizontal-lying central frame 140 that may substantially be rectangular-plan shaped and is rigidly fastened in the lower part of the horizontal arms 130 and substantially to the centre thereof.

This central frame 140 may be made by means of further bars or sections of bars that may be rigidly fastened to the lower longitudinal bars 131 of the horizontal arms 130.

The central frame 140 may be provided with specific hooking members 145 adapted to hook the movable frame 125 to a load to be lifted (not shown), for example but not necessarily to the upper part of a mould for moulding carbon-fibre based composite materials. In the example shown, these hooking members 145 are substantially chains that are hung to the central frame 140 and that may be individually provided with suitable hooks adapted to be hooked to the load to be lifted that is positioned below the movable frame 125, for example causing it to pass in the space comprised between two support columns 105 defining a side of the polygon.

Returning to the horizontal arms 130 of the movable frame 125, the four free ends of these horizontal arms 130 may be connected to just as many sliding blocks 150, each of which is slidingly coupled to a corresponding support column 105 so as to be adapted to slide with respect thereto in vertical direction.

As illustrated more clearly in Figure 4, each sliding block 150 in particular may be rigidly fastened to a pair of skids 155 that are both coupled to a same guide track 160 extending with rectilinear and vertical longitudinal axis, and is rigidly fastened to the corresponding support column 105.

Each skid 155 may obtain a prismatic coupling with this guide track 160, i.e. a coupling that rigidly constrains the skid 155 to the guide track 160 with respect to all levels of freedom of rotation and translation, with the exception of the translation along the longitudinal axis of the guide track 160 itself.

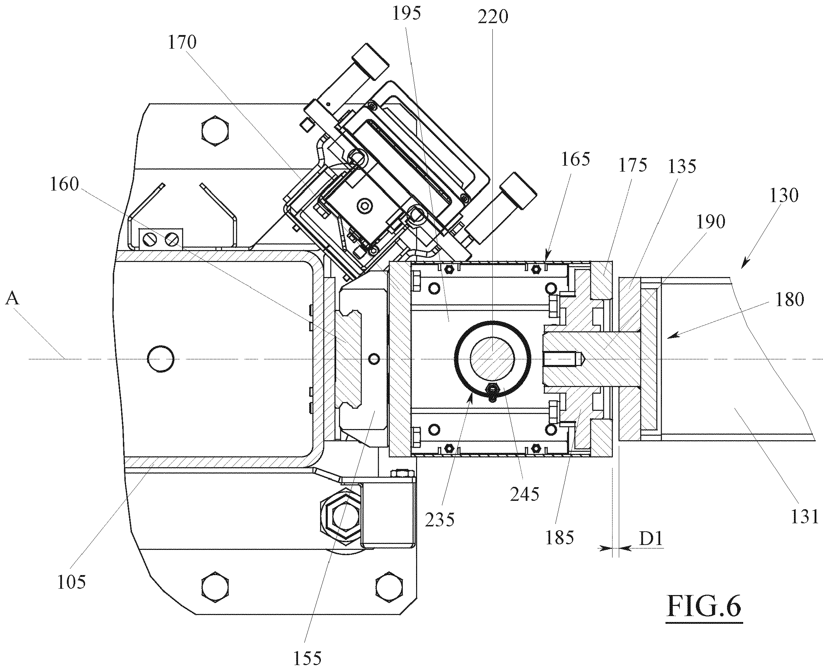

For example (see Fig. 6), the guide track 160 may have a cross section, i.e. taken with respect to a plane orthogonal to the longitudinal axis, having constant shape for the entire length thereof and shaped for example, like a dovetail or mushroom, and each skid 155 may have a channel having cross section having shape matched to the one of the guide track 160 on which it is slidingly inserted substantially to length.

To facilitate the sliding of the skids 155 on the guide track 160, one or both these components may be made with materials with a low friction coefficient and/or it may be provided for the same to be periodically lubricated with grease or other lubricants.

Although the example illustrated provides for each sliding block 150 to be provided with two skids 155 arranged in a row along the guide track 160 and mutually spaced apart along the longitudinal axis thereof, it is not excluded, in other embodiments, for each sliding block 150 to be provided with one skid 155 alone, possibly having greater longitudinal extension, or with a number of skids 155 which is greater than two.

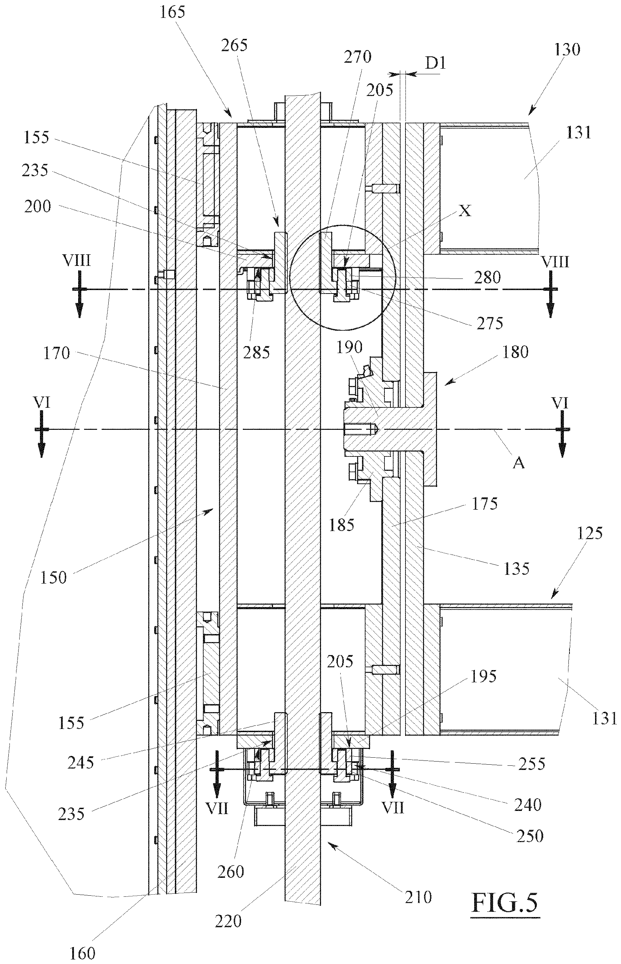

As illustrated in Figure 5, each sliding block 150 may comprise a rigid structure 165, which is connected to the movable frame 125 and is rigidly fastened to the skids 155.

This rigid structure 165 may comprise two vertical plates, of which a first vertical plate 170 and a second vertical plate 175, which are parallel and mutually face each other.

Although they are rigidly connected to each other, the first vertical plate 170 and the second vertical plate 175 may be mutually spaced apart so that an empty space remains between them.

The first vertical plate 170 is rigidly fastened to both skids 155 while the second vertical plate 175 is parallel, facing and connected to the end plate 135 that is fastened to the free end of the respective horizontal arm 130 of the movable frame 125.

In particular, the connection between the movable frame 125 and the sliding block 150 may be obtained by means of one hinged joint 180 alone that defines a horizontal swivel axis A, which is parallel to the diagonal of the defined quadrilateral of the support columns 105 that passes through the support column 105 to which the sliding block 150 in question is associated.

This swivel axis A further is preferably coplanar with the swivel axes A defined by the hinge joints 180 of all the other sliding blocks 150 so as to intersect them substantially in the centre of the quadrilateral defined by the support columns 105.

From a constructional viewpoint, the hinged joint 180 may comprise a bush 185 connected to the sliding block 150, for example to the second vertical plate 175, which defines a hole having an axis coinciding with the swivel axis A, and a pin 190 rigidly fastened to the free end of the horizontal arm 130 of the movable frame 125, for example to the end plate 135, which is inserted coaxially and substantially to length in the hole defined by the bush 185.

It is worth noting that the bush 185 may be defined by the inner ring of a bearing, preferably a floating bearing, for example a floating ball bearing, which outer ring is blocked in an annular support rigidly fastened to the sliding block 150.

It is also worth noting that in other embodiments, the bush 185 could be connected, for example according to the same methods, to the free end of the horizontal arm 130 of the movable frame 125, for example to the end plate 135, while the pin 190 could be rigidly fastened to the sliding block 150, for example to the second vertical plate 175.

It is preferable in both cases for there to be, along the direction of the swivel axis A, a given distance D1 between the sliding block 150 and the free end of the horizontal arm 130 of the movable frame 125, in the case at hand between the end plate 135 and the second vertical plate 175, and for the pin 190 to be free to axially slide in the hole of the bush 185 so as to allow the movable frame 125 to carry out small lateral movements, at least for a stretch equal to the aforesaid distance D1.

To facilitate the rotation and/or sliding of the pin 190 in the hole of the bush 185, one or both these components may be made with materials with a low friction coefficient and/or may be periodically lubricated with grease or other lubricants.

Returning to the sliding block 150, the rigid structure 165 may further comprise a first horizontal plate 195, and possibly also a second horizontal plate 200, which is overlapping and vertically spaced apart with respect to the first horizontal plate 195 (see Fig. 5).

For example, the first horizontal plate 195 and the second horizontal plate 200 may be rigidly fastened to the first vertical plate 170 and/or to the second vertical plate 175, extending in the empty space comprised between them.

The first horizontal plate 195 may be positioned at a lower height with respect to the swivel axis A defined by the hinged joint 180, while the second horizontal plate 200 may be positioned at a higher height than said swivel axis A.

Both the first horizontal plate 195 and the second horizontal plate 200 make available a respective, preferably flat and horizontal, abutment surface 205, which faces downwards. Each sliding block 150 is further associated with a respective drivetrain assembly 210 that is adapted to transform the mechanical power generated by a motor 215 into the sliding of said sliding block 150 along the corresponding guide track 160.

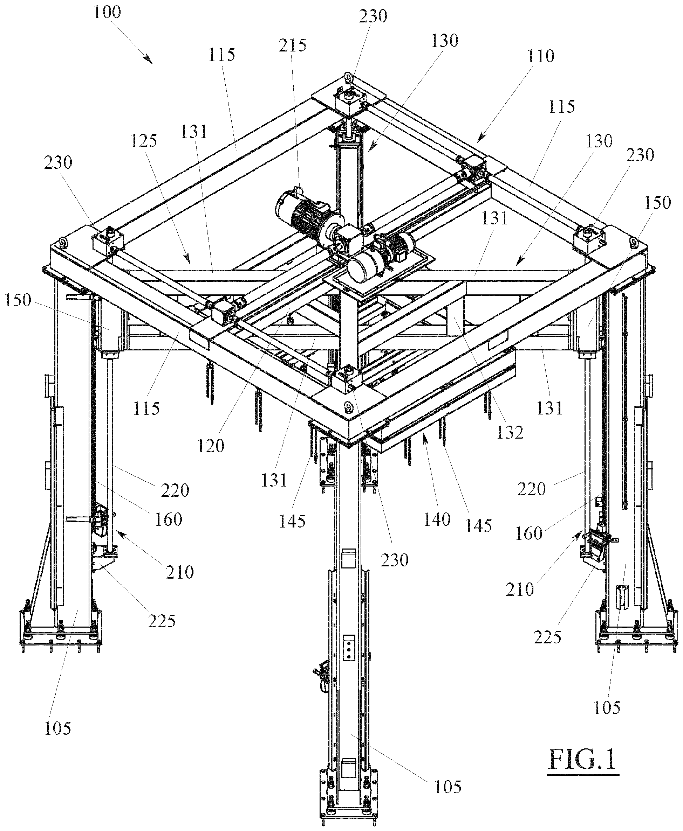

The lifting apparatus 100 preferably comprises one motor 215 (see Fig. 1) alone, for example an electric motor, that is kinematically connected with all the drivetrain assemblies 210.

This motor 215 may be installed on the stiffening frame 110, for example in the centre of the intermediate bar 120.

However, it is not excluded in other embodiments for the lifting apparatus 100 to comprise a plurality of motors 215, for example a plurality of electric motors, each of which is kinematically connected with a respective drivetrain assembly 210 or with a respective unit of drivetrain assemblies 210.

Each drivetrain assembly 210 may comprise an operating screw 220, i.e. a threaded rod, that is oriented vertical and is rotatably coupled to the support column 105 to which the corresponding sliding block 150 is associated.

For example, the lower end of the operating screw 220 may be supported, by means of the interposition of one or more bearings, for example thrust bearings, by a bracket 225 that projects cantilevered from a stretch of the support column 105 placed below the guide track 160.

The upper end of the operating screw 220 may instead be rotatably coupled, with the possible interposition of further bearings, to a support 230 fastened on the stiffening frame 110.

As illustrated in Figure 5, the operating screw 220 may extend through the corresponding sliding block 150, for example passing with clearance through corresponding through holes 235 that are obtained in the first horizontal plate 195 and in the second horizontal plate 200.

Each drivetrain assembly 210 further comprises a first female screw 240 that is screwed on the operating screw 220 and is placed at a lower height with respect to the first horizontal plate 195 of the sliding block 150.

The first female screw 240 in particular may comprise a tubular body 245 that is provided with an inner threading adapted to screw on the outer threading of the operating screw 220.

To reduce the sliding frictions between the relative threadings, this tubular body 245 and/or the operating screw 220 may be made with materials with a low friction coefficient and/or may be periodically lubricated with grease or other lubricants.

The tubular body 245 is inserted with clearance into the through hole 235 of the first horizontal plate 195 and below the latter there is a protruding flange 250 that projects radially outward and has a greater diameter with respect to said through hole 235.

The first female screw 240 further comprises an annular block 255 that is inserted externally on the tubular body 245 and is rigidly fastened above the protruding flange 250.

However, other embodiments do not exclude for the annular block 255 to be made in a single piece with the protruding flange 250 and possibly with the tubular body 245.

The annular block 255 makes available a, preferably flat and horizontal, resting surface 260 facing upwards and faces the abutment surface 205 of the first horizontal plate 195.

Since the sliding block 150 tends to spontaneously slide downwards due to the effect of gravity, the abutment surface 205 of the first horizontal plate 195 leans against the resting surface 260 of the first female screw 240, which threading in turn leans on the threading of the operating screw 220 that prevents them from sliding downwards.

In this manner, the first female screw 240 is axially constrained to the sliding block 150 and in virtue of the friction between the abutment surface 205 and the resting surface 260, is also prevented from rotating about the axis of the operating screw 220.

Therefore, following a rotation of the operating screw 220, the first female screw 240 is constrained to slide axially along the operating screw 220 itself, bringing the sliding block 150 with it.

This same technical effect may be obtained in other embodiments by also rigidly fastening the sliding block 150 to the first female screw 240 with different methods, so long as these two components are mutually constrained in axial and rotational direction.

Each drivetrain assembly 210 may further comprise a second female screw 265 that is screwed on the operating screw 220 above the first female screw 240 and is placed at a lower height with respect to the second horizontal plate 200 of the sliding block 150.

For example, the second female screw 265 may be interposed between the first horizontal plate 195 and the second horizontal plate 200, preferably close to the latter.

The second female screw 265 may be identical to the first female screw 240.

The second female screw 265 in particular also may comprise a tubular body 270 that is provided with an inner threading adapted to screw on the outer threading of the operating screw 220.

To reduce the sliding frictions between the relative threadings, this tubular body 270 and/or the operating screw 220 may be made with materials with a low friction coefficient and/or may be periodically lubricated with grease or other lubricants.

The tubular body 270 is inserted with clearance into the through hole 235 of the second horizontal plate 200 and below the latter there is a protruding flange 275 that projects radially outwards and has a greater diameter with respect to said through hole 235.

The second female screw 265 further comprises an annular block 280 that is inserted externally on the tubular body 270 and is rigidly fastened above the protruding flange 275. However, other embodiments do not exclude for the annular block 280 to be made in a single piece with the protruding flange 275 and possibly with the tubular body 270.

The annular block 280 makes available a, preferably flat and horizontal, resting surface 285 facing upwards and facing the abutment surface 205 of the second horizontal plate 200.

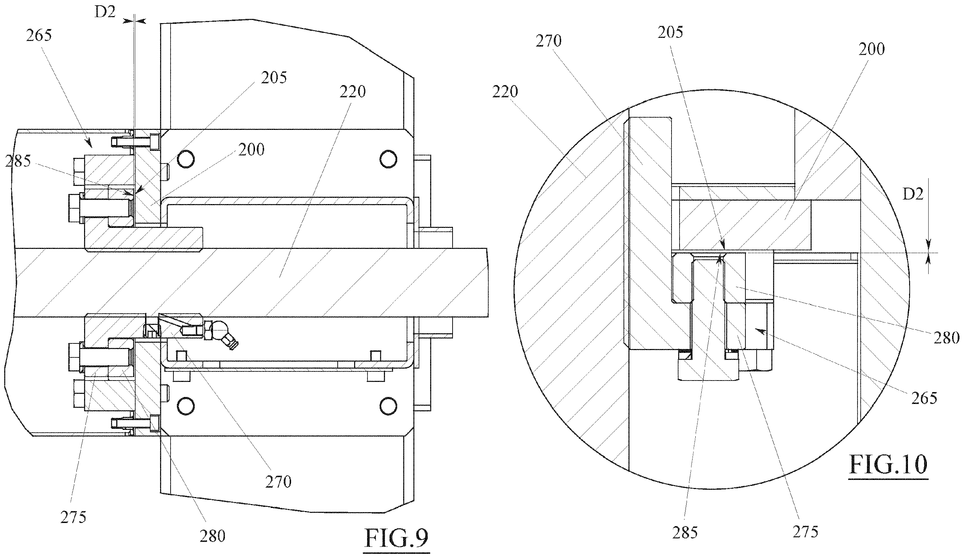

Unlike the preceding case, the resting surface 285 of the second female screw 265 is vertically separated from the abutment surface 205 of the second horizontal plate 200 by a non-zero pre-set distance D2 (see Fig. 10).

In other words, the vertical distance between the abutment surfaces 205 of the first and second horizontal plate 195 and 200 is selected so that when the abutment surface 205 of the first horizontal plate 195 is leaning on the resting surface 260 of the first female screw 240, the abutment surface 205 of the second horizontal plate 200 is separated from the resting surface 285 of the second female screw 265 by a non-zero vertical distance D2.

For example, such vertical distance D2 may be less than the pitch of the outer threading of the operating screw 220 and more preferably, equal to or less than 1 mm (millimetre). In this manner, so long as this separation is kept, the second female screw 265 is released in axial direction with respect to the corresponding sliding block 150 and does not perform any active supporting function of the movable frame 125.

With the exception of its own weight, no load is applied on the second female screw 265 and the operating screw 220 may rotate therein in almost free manner, with minimum friction between the respective threadings, and therefore in substantial absence of wear. Under these conditions, the weight of the movable frame 125 is discharged only onto the first female screw 240 so that following the rotation of the operating screw 220, an increased sliding friction may be generated between the threading of the latter and the threading of the first female screw 240.

Although it is mitigated by the lubrication, this sliding friction may progressively wear the threading of the first female screw 240, causing a progressive lowering of the sliding block 150 with respect to the second female screw 265 and in particular, a progressive approaching in vertical direction of the abutment surface 205 of the second horizontal plate 200 with respect to the resting surface 285 of the second female screw 265.

If the entity of this lowering reaches the distance D2 initially set, the abutment surface 205 of the second horizontal plate 200 may come into direct contact with the resting surface 285 of the second female screw 265, which therefore receives at least part of the weight of the movable frame 125 and is axially constrained to the sliding block 150 and prevented from rotating with respect to the operating screw 220, according to the same modalities described above for the first female screw 240.

However, it is not excluded for the second female screw 265 to be prevented from rotating with respect to the operating screw 220 with other modalities, for example constraining it to the sliding block 150 in rotational direction.

In this manner, in case of excessive wear of the first female screw 240, the second female screw 265 automatically begins operating, assisting and/or replacing the first female screw 240 in the action of transforming the rotary movement of the operating screw 220 into the vertical movement of the sliding block 150.

The second female screw 265 is therefore a safety element which ensures the drivetrain assembly 210 can continue to operate efficiently also when the first female screw 240 is very worn, thus avoiding sudden structural failures.

This solution also has the advantage of allowing the operators to verify the state of wear of the first female screw 240 prior to reaching the aforesaid critical condition.

Indeed, by periodically measuring the distance D2 between the abutment surface 205 of the second horizontal plate 200 and the resting surface 285 of the second female screw 265, for example by means of a thickness gauge, it is possible to understand the entity of the wear of the first female screw 240.

For example, hypothesizing that the initial distance D1 is equal to 1 mm, it could be established that when such distance D1 is less than 0.5 mm the wear is excessive and the first female screw 240 is to be replaced, even though the second female screw 265 has not intervened.

As anticipated, all the drivetrain assemblies 210 of the lifting apparatus 100 may receive mechanical power from a same motor 215, which may be kinematically connected with all the operating screws 220.

In particular, this motor 215 may be kinematically connected to the operating screws 220 by means of a mechanical system, for example a series of drive shafts and gears.

In this manner, by activating the only motor 215, it advantageously is possible to cause the simultaneous sliding of all the sliding blocks 150 in the same direction and at the same speed so that the movable frame 125 performs an almost perfect translation in vertical direction, upwards to lift the load or downwards to lower it.

However, it is not excluded in other embodiments for the lifting apparatus 100 to comprise a plurality of motors 215, for example a plurality of electric motors, each of which is kinematically connected with a respective drivetrain assembly 210 or with a respective unit of drivetrain assemblies 210, and a control system that is capable of controlling these electric motors in a coordinated manner to cause the simultaneous sliding of all the sliding blocks 150 in the same direction and at the same speed.

Obviously, a person skilled in the art may make several technical-applicative modifications to all that above, without departing from the scope of the invention as hereinbelow claimed.

## Claims

1. A lifting apparatus (100) comprising:
- a plurality of support columns (105) arranged in plan at the vertexes of a polygon,
- a plurality of sliding blocks (150), each of which is slidingly coupled to a corresponding support column (105) so as to be adapted to slide with respect thereto in substantially vertical direction,
- a movable frame (125) adapted to carry a load to be lifted, which is placed between the support columns (105) and is connected to the sliding block (150) of each of them, and
- a motorized actuation system adapted to actuate the simultaneous and parallel sliding of all the sliding blocks (150) with respect to the corresponding support columns (105),
wherein said motorized actuation system comprises a plurality of drivetrain assemblies (210) individually adapted to transform the mechanical power generated by a motor (215) into the sliding of a corresponding sliding block (150), each of which comprises:
- an operating screw (220) oriented substantially vertical and rotatably coupled to the support column (105) to which the corresponding sliding block (150) is slidingly coupled, and
- at least a first female screw (240) screwed on the operating screw (220) and axially blocked to the respective sliding block (150).

2. A lifting apparatus (100) according to claim 1, wherein each drivetrain assembly (210) also comprises a second female screw (265) screwed on the operating screw (220), which is axially movable with respect to the respective sliding block (150) and is provided with a resting surface (285) placed below a corresponding abutment surface (205) of the corresponding sliding block (150), from which it is vertically spaced apart by a predetermined quantity (D2).

3. A lifting apparatus (100) according to claim 2, wherein the vertical distance (D2) between the resting surface (285) of the second female screw (265) and the abutment surface (205) is less than the pitch of the operating screw (220).

4. A lifting apparatus (100) according to any one of the preceding claims, wherein the second female screw (265) of each drivetrain assembly (210) is placed at a higher level with respect to the first female screw (240) of the same drivetrain assembly (210).

5. A lifting apparatus (100) according to any one of the preceding claims, comprising at least four of said support columns (105) arranged in plan at the vertexes of a quadrilateral.

6. A lifting apparatus (100) according to claim 5, wherein the movable frame (125) comprises two horizontal arms (130) that are arranged crossed, each of which extends parallel to a respective diagonal of the quadrilateral defined by the support columns (105) and has opposite ends individually connected to a corresponding sliding block (150).

7. A lifting apparatus (100) according to claim 5 or 6, wherein each sliding block (150) is connected to the movable frame (125) by means of a hinged joint (180) defining a swivel axis (A) parallel to a diagonal of the quadrilateral and coplanar to the swivel axes (A) of the movable frame (125) with the other sliding blocks (150).

8. A lifting apparatus (100) according to claim 7, wherein said hinged joint (180) comprises a bush (185) connected to one of the movable frame (125) and the corresponding sliding block, and a pin (190) connected to the other of the movable frame (125) and the corresponding sliding block (150), which is axially inserted in said bush (185).

9. A lifting apparatus (100) according to claim 8, wherein the pin (190) is free to slide axially in the bush (185).

10. A lifting apparatus (100) according to any one of the preceding claims, comprising a stiffening frame (110) placed at the top of the support columns (105) and adapted to connect them rigidly to one another.

11. A lifting apparatus (100) according to any one of the preceding claims, wherein each sliding block (150) is slidingly coupled to the corresponding support column (105) by means of one or more skids (155) rigidly fastened to the sliding block (150), which create a prismatic coupling with a corresponding guide track (160) rigidly fastened to the support column (105).

12. A lifting apparatus (100) according to any one of the preceding claims, comprising hooking members (145) for hooking the movable frame (125) to a load to be lifted.

13. A lifting apparatus (100) according to claim 12, wherein the hooking members (145) comprise a plurality of chains hung to the movable frame (125).

14. A lifting apparatus (100) according to any one of the preceding claims, wherein the motorized actuation system comprises one motor (215) alone kinematically connected to the operating screws (220) of all the drivetrain assemblies (210).
